# FASCICULE DE BREVET EUROPEEN

(11) **EP 4 006 469 B1**
(45) Date de publication et mention de la délivrance du brevet: **03.04.2024**
(21) Numéro de dépôt: 21208130.1
(22) Date de dépôt: 15.11.2021
(51) Int. Cl.: F25J 3/04

(54) **PROCÉDÉ ET APPAREIL DE VAPORISATION DE LIQUIDE DE PURGE D'UN VAPORISEUR DE LIQUIDE CRYOGÉNIQUE**
VERFAHREN UND VORRICHTUNG ZUM VERDAMPFEN VON SPÜLFLÜSSIGKEIT AUS EINEM VERDAMPFER FÜR KRYOGENE FLÜSSIGKEITEN
METHOD AND DEVICE FOR VAPORISING PURGE LIQUID DRAINED FROM A CRYOGENIC LIQUID VAPORISER

(30) Priorité: 26.11.2020 FR 2012162
(43) Date de publication de la demande: 01.06.2022
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: DAVIDIAN, Benoit, 94503 CHAMPIGNY SUR MARNE (FR)
(74) Mandataire: Air Liquide

(56) Documents cités:
- EP-A1- 2 767 787
- US-A- 5 161 381
- US-A1- 2003 228 707
- US-A1- 2014 223 959

## Description

La présente invention est relative à un procédé et à un appareil de vaporisation de liquide de purge d'un vaporiseur de liquide cryogénique. Un vaporiseur de liquide cryogénique vaporise partiellement un liquide contenant des impuretés pour former un gaz. Aux températures cryogéniques, certaines de ces impuretés sont susceptibles de se déposer dans les éléments constitutifs des unités de séparation d'air, en particulier dans le vaporiseur-condenseur des colonnes de distillation. La connaissance de la teneur en impuretés est donc indispensable, tant en termes de qualité des produits, que de sécurité des installations ;
De tels liquides cryogéniques, qui sont habituellement de l'oxygène, de l'azote ou encore de l'argon, possèdent une température inférieure à environ -170° C. Ils se trouvent notamment produits par la mise en oeuvre d'une colonne de distillation appartenant à une unité de séparation d'air.

Il est connu de réaliser des échantillonnages de ces liquides cryogéniques, en vue de leur analyse ultérieure. Ceci permet alors de contrôler notamment la teneur en impuretés peu volatiles de ces liquides, telles que le protoxyde d'azote N₂O, le dioxyde de carbone CO₂ ou les hydrocarbures CₙHₘ.

Lorsqu'on s'intéresse à l'analyse d'impuretés peu volatiles, la difficulté réside dans l'obtention d'un échantillon vaporisé à température ambiante, qui soit aussi représentatif que possible du liquide à analyser.

En effet, les méthodes d'analyse couramment utilisées, telles que la chromatographie en phase gazeuse ou la spectrométrie infra rouge, impliquent un réchauffement de l'échantillon prélevé jusqu'à une température voisine de l'ambiante. A cet effet, il est nécessaire de vaporiser tout d'abord le liquide cryogénique échantillonné, puis de le réchauffer.

Dans ces conditions, pour aboutir à une analyse représentative d'un bain de liquide cryogénique, il convient d'une part d'en prélever un échantillon liquide représentatif de la composition moyenne de l'ensemble du bain, puis de le vaporiser de manière rapide et complète.

Dans le cas de l'unité de séparation d'air, on connait notamment deux modes d'échantillonnage de liquides cryogéniques.

Le premier de ceux-ci, encore dénommé ascenseur liquide, est fonde sur l'effet thermosiphon. Pour ce faire, on réalise une dérivation, ou « by-pass », du liquide à analyser, dans laquelle la circulation est assurée par la vaporisation d'une fraction de ce liquide.

Cet ascenseur liquide se trouve déporte en paroi de la boite froide de l'unité de séparation d'air, au sein d'un caisson isole, par exemple par de la laine de roche, afin de limiter les entrées thermiques. Un prélèvement continu du liquide cryogénique circulant dans cet ascenseur se trouve alors vaporisé dans un échangeur atmosphérique à ailettes, associe à un mélangeur, qui est communément appelé «vapo-flash».

Un mode de prélèvement alternatif, encore dénommé prise capillaire, consiste à soutirer le liquide sous pression à travers un capillaire, à savoir un premier tube de faible diamètre intérieur, par exemple voisin de 0,5 mm. Puis, il s'agit d'acheminer ce liquide dans un second tube, de section plus importante, jusqu'à un point chaud assurant une vaporisation instantanée de la totalité du liquide à analyser.

Ces systèmes connus de prélèvement sont largement répandus, et garantissent des résultats globalement satisfaisants. Cependant, ils impliquent certains inconvénients. Ainsi, ils peuvent induire un problème de représentativité de l'échantillon prélevé, en particulier en ce qui concerne la prise capillaire. En effet, cette dernière, si elle est raccordée à un bain de liquide, ne permet pas la circulation forcée dudit liquide à analyser.

Par ailleurs, ces systèmes sont sujets au vieillissement, en particulier en ce qui concerne l'ascenseur liquide.

En effet, dans le cas de ce dernier, l'humidité pénètre progressivement dans le caisson d'isolation, ce qui provoque la formation, puis l'accumulation de glace. Les entrées de chaleur deviennent alors telles que la circulation liquide peut en être affectée.

Dans ces conditions, l'invention se propose de mettre en oeuvre un procédé permettant d'échantillonner, de manière fiable, un liquide cryogénique, tout en faisant appel à une installation ne requérant qu'une faible maintenance.

FR-A-2839153 décrit un procédé selon le préambule de la revendication 1 et prévoit la vaporisation du liquide cryogénique par échange de chaleur avec un fluide chaud. A cet effet, ce brevet a pour objet un procédé d'échantillonnage d'au moins un liquide cryogénique, notamment de l'oxygène ou de l'azote, contenant des impuretés telles que le protoxyde d'azote, le dioxyde de carbone ou des hydrocarbures, dans lequel le liquide se vaporise pour former un gaz, le gaz étant ensuite envoyé d'abord à un débitmètre et ensuite à un analyseur. US 2003/228707 A1 décrit aussi un procédé selon le préambule de la revendication 1.

Selon un objet de l'invention, il est prévu un procédé selon la revendication 1..

Selon des aspects facultatifs :
- le vaporiseur se trouve dans la cuve d'une colonne de distillation
- la première partie constitue moins que 5%, préférentiellement inférieure à 1%, voire à 0.5%du liquide réchauffé
- la deuxième partie constitue plus que 95 %, préférentiellement supérieure à 99%, voire à 99.5% du liquide réchauffé
- le vaporiseur de liquide cryogénique vaporise le liquide cryogénique pour produire un produit gazeux,
- la deuxième partie du liquide vaporisé dans le réchauffeur est envoyée se mélanger avec le produit gazeux.
- une partie de liquide vaporisé dans le réchauffeur, de préférence dont le débit a été mesuré, est envoyée se mélanger avec le produit gazeux.
- le produit gazeux se réchauffe dans un échangeur de chaleur jusqu'à une température supérieure à 0°C et ensuite est mélangé avec la deuxième partie du liquide vaporisé dans le réchauffeur.

Selon un autre objet de l'invention, il est prévu un appareil selon la revendication 8.

Le liquide cryogénique vaporisé dans le vaporiseur peut être de l'oxygène liquide.

Le liquide cryogénique vaporisé dans le vaporiseur peut être un liquide enrichi en oxygène contenant au moins 25% mol d'oxygène. Eventuellement l'appareil ne comprend pas de moyens pour envoyer la première partie du liquide de purge vaporisé vers le débitmètre et/ou ne comprend pas de moyens pour envoyer la deuxième partie du liquide de purge vaporisé vers l'analyseur.

Selon un autre objet d'invention, il est prévu un appareil de séparation d'air par distillation cryogénique comprenant un système de colonnes pour produire un liquide cryogénique et un appareil de vaporisation de liquide de purge tel que décrit ci-dessus, le système de colonnes étant relié au réchauffeur de liquide cryogénique.

Le système de colonnes comprend de préférence une première colonne opérant à une première pression et une deuxième colonne opérant à une deuxième pression plus basse que la première pression.

L'appareil peut comprendre :
- des moyens pour soutirer le liquide de purge de la deuxième colonne reliés au réchauffeur
- des moyens pour soutirer le liquide de cuve de la première colonne reliés au réchauffeur.

La purge de liquide du vaporiseur sur un appareil de séparation d'air par distillation cryogénique à double colonne représente un petit débit, notamment sur les appareils de petite taille, qu'il est difficile de mesurer. Il est cependant important d'avoir une mesure précise de ce débit, qui fixe le taux de concentration en impureté dans le bain d'oxygène liquide, d'autant plus si l'appareil produit de l'oxygène directement gazeux depuis la colonne basse pression.

La solution selon l'état de l'art est un système de purge par échantillonnage, qui consiste à remplir puis vider périodiquement un volume connu, sur une durée connue, de façon à avoir le bon débit purgé en moyenne. Ceci nécessite un bidon, plusieurs vannes, de l'instrumentation (mesure de niveau). Le débit instantané de purge est important et en général « jeté » dans un système de purge cryogénique. Les molécules ne sont pas récupérées. Dans certains cas, le liquide purgé peut être envoyé dans un stockage, qui sert de secours en cas de panne sur l'appareil.

L'analyse des impuretés se fait à l'aide d'un système dédié d'échantillonnage sur le bain de liquide cryogénique du vaporiseur, typiquement de type «vapo flash»

L'invention concerne également un appareil de séparation d'air comprenant un vaporiseur de liquide cryogénique et un appareil de vaporisation de liquide de purge. La présente invention vise à valoriser la purge de déconcentration d'un vaporiseur sous forme de produit gaz en la combinant à l'analyse des impuretés secondaires L'invention consiste à vaporiser rapidement toute la purge de liquide, d'obtenir un gaz à température ambiante, de mesurer de façon aisée son débit et de faire un prélèvement gazeux pour être envoyé en continue à des analyseurs d'impureté. Le gaz restant n'est pas analysé et est ensuite mélangé avec le gaz de production, évitant ainsi de perdre les molécules.

L'intérêt est d'avoir une mesure de débit fiable, continue et de supprimer un système d'échantillonnage cryogénique pour la mesure des impuretés, système qui est coûteux, encombrant et mal aisé à installer sur une boite froide isolée sous vide.

Le procédé selon l'invention sera maintenant décrit de manière plus détaillée en se référant aux Figures.

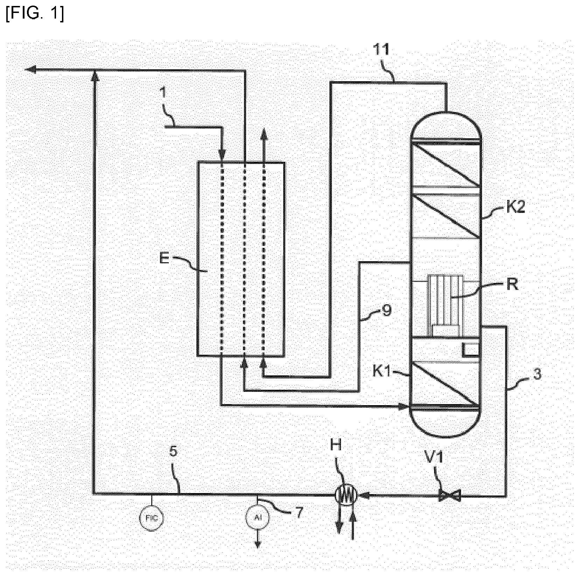

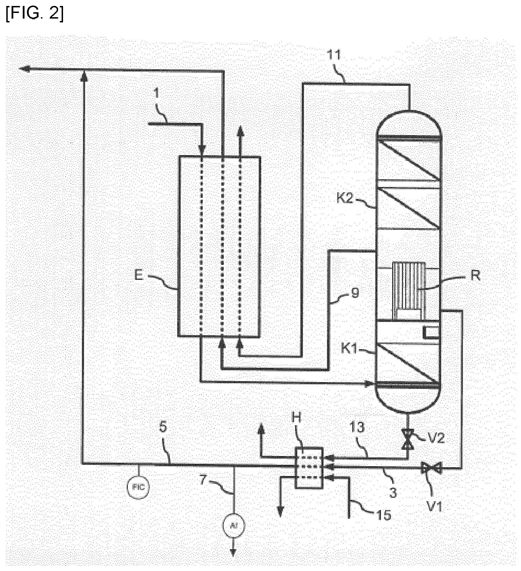

[FIG. 1] et [FIG. 2] représentent schématiquement des procédés selon l'invention.

Dans la [FIG. 1] l'appareil de séparation d'air par distillation cryogénique est constituée par un échangeur de chaleur principal E et une double colonne K1, K2, à l'intérieur d'une ou plusieurs enceintes isolées, par exemple une boîte froide isolée sous vide, permettant un fonctionnement à des températures cryogéniques.

La double colonne comprend une première colonne K1, surmontée d'une deuxième colonne K2 opérant à une pression plus basse que la première colonne.

De l'air 1 se refroidit dans l'échangeur E est envoyé en cuve de la première colonne K1 où il se sépare par distillation. Un débit enrichi en oxygène est envoyé de la cuve de la première colonne K1 à un point intermédiaire de la colonne K2. Un débit enrichi en azote est envoyé de la tête de la première colonne K1 vers la deuxième colonne K2.

L'azote de tête de la première colonne se condense dans le vaporiseur-condenseur R en cuve de la deuxième colonne où il sert à vaporiser le liquide de cuve de la deuxième colonne qui entoure le vaporiseur R. Un débit d'oxygène gazeux 9 constituant un, voire le, produit de l'appareil est soutiré de la deuxième colonne et se réchauffe dans l'échangeur E. De l'azote gazeux 11 de la tête de la deuxième colonne se réchauffe dans l'échangeur E.

Le vaporiseur R représenté ici est un vaporiseur à bain classique et donc la purge est soutirée du bain. Par contre le vaporiseur R peut être un vaporiseur à film où le « bain » de liquide est sous le vaporiseur ou encore un vaporiseur dit à bain mais avec une capacité embarquée ou encore un tuyau de recirculation, sans de vrai bain dans le sens classique.

Ainsi on peut soutirer le liquide de purge d'un bain de liquide entourant le vaporiseur ou issu du vaporiseur,

La purge 3 du bain d'oxygène liquide ici entourant le vaporiseur R est soutirée en permanence en bas du bain. Elle est ensuite vaporisée « brutalement » (vaporisation flash) contre un fluide qui assure une température de paroi élevée (de sorte que ΔT entre le liquide de purge et le fluide soit supérieure à 100°C) de façon à éviter une concentration locale en impuretés secondaires (CnHm, CO2, N2O) importante et dangereuse pour la sécurité dans un réchauffeur H. Cela permet aussi de s'assurer que l'ensemble des impuretés présent dans la purge liquide est présent dans le gaz ainsi formé, ce qui permettra d'avoir une analyse fiable des impuretés (ainsi il n'y a pas d'impuretés déposées dans le réchauffeur H qui fausseraient l'analyse). Elle est ensuite réchauffée sous forme gazeuse jusqu'à la température ambiante dans le réchauffeur H.

L'échange thermique dans le réchauffeur H peut se faire contre de l'air ambiant dans une épingle de vaporisation atmosphérique, contre de l'eau dans un échangeur de type tubes et calandre, ou de façon préférentielle, de type tubes spiralés et calandre ou encore tubes spiralés co-axiaux. L'échangeur peut aussi comporter des tubes spiralés pour la purge et pour de l'eau, le tout noyé dans une matrice d'aluminium ou de cuivre. L'échangeur peut aussi comporter un chauffage électrique.

Le réchauffeur H peut se situer en dehors de toute enceinte isolée.

On maintient les parois du réchauffeur H destinées à entrer en contact avec le ou chaque liquide cryogénique 3 à une température au moins 15°C, de préférence au moins 50°C, voire au moins 100°C au-dessus de la température du liquide de purge de sorte que le liquide vaporisé se réchauffe jusqu'à au moins -50°C, voire au moins - 20°C, de préférence au moins 0°C .

Pour ce faire, le fluide chauffant le réchauffeur H doit généralement être plus chaud que le liquide cryogénique, d'au moins 100°C.

La température des parois du réchauffeur est de préférence également supérieure à la température de sublimation ou de vaporisation de l'impureté la moins volatile contenue dans le liquide cryogénique

On prélève un petit débit 7 de la purge 3 par exemple au plus 5% de la purge préférentiellement inférieure à 1%, voire à 0.5% de la purge et ce débit est envoyé via un tubulure de quelques mètres de long aux analyseurs des impuretés qui les analysent à température ambiante, c'est-à-dire à au moins 0°C. La vaporisation totale de la purge 3 permet de mesurer son débit de façon fiable (car il s'agit d'un débit gazeux qui est à température ambiante. La séparation due à la prise d'échantillon se fait en amont de la mesure de débit, Le faible débit de la prise d'échantillon ne perturbe que marginalement et de façon sécuritaire (valeur majorante) la mesure du débit de purge 3.

On mesure alors facilement la purge gazeuse restante 5 constituant au moins 95% de la purge préférentiellement supérieure à 99%, voire à 99.5% de la purge à température ambiante dans un moyen de mesure de débit FIC, par exemple par une simple plaque à orifice ou un débitmètre massique à fil chaud. Ce moyen de mesure FIC se trouve en dehors de l'enceinte, tout comme le réchauffeur H, puisque la mesure de débit s'effectue à température ambiante.

On remélange ensuite la purge réchauffée 5 avec la production d'oxygène gazeuse 9, au bout chaud de l'échangeur E, ce qui permet d'augmenter la production de quelques pourcents, typiquement autour de 1%

Le débit de purge 3 est envoyé pendant tout le fonctionnement de l'appareil vers le réchauffeur H à travers la vanne V1 ouverte. La vanne V1 régule le débit de purge grâce à la mesure de débit FIC.

L'invention permet de minimiser le nombre d'éléments pour gérer la purge de façon plus fiable et de façon continue, et sa compacité/simplicité permet de facilement s'intégrer à une boite froide isolée sous vide.

L'appareil peut comporter une turbine (non indiquée sur la Fig 1) pour maintenir l'appareil en froid. Dans le cas d'une boite froide sous vide, le corps de la turbine peut être directement soudé sur la virole de la boite froide, ce qui permet de gagner en compacité et assure l'étanchéité vis-à-vis du vide. Les internes de la turbine, communément appelés cartouche peuvent être retirés depuis l'extérieur, sans intervenir dans la boite froide sous vide, par exemple pour changer la roue en cas de casse de la machine. De même, un filtre peut être disposé à l'aspiration de la turbine pour protéger la roue. Il est aussi avantageux de le prévoir intégré à la cartouche ou au corps de la turbine, tout en étant accessible depuis l'extérieur pour pouvoir le changer ou le nettoyer.

Par ailleurs, pour gagner en compacité, les vannes cryogéniques peuvent avoir leur corps installées dans la boite froide sous vide et avoir leur passe-rallonge soudé à la paroi de la boite froide, éventuellement à travers une collerette et/ou un soufflet disposé entre le passe-rallonge et la virole de la boite froide sous vide.

La turbine et les vannes peuvent être installées dans une partie de la boite froide qui a un diamètre réduit par rapport au reste de la boite froide, de façon à placer ces équipements dans « l'ombre » de la boite froide, sans que cela empiète par exemple sur le gabarit de transport.

Par ailleurs, lors de l'arrêt prolongé de l'appareil, il faut purger l'ensemble des liquides cryogéniques, envoyé en général vers un stockage extérieur où les liquides se vaporisent lentement. Ce stockage est de grande taille et est donc coûteux. On peut ajouter cette fonction à l'échangeur H utilisé pour vaporiser la purge continue du vaporiseur R, en le surdimensionnant: cela permet d'avoir un appareil qui ne rejette aucun liquide cryogénique, donc sans avoir à gérer les problèmes de sécurité associés.

[FIG. 2] montre une version modifiée de l'appareil de la précédente figure où le réchauffeur H sert à vaporiser, en plus du liquide de purge, le liquide de cuve de la première colonne K1. En effet, lors de l'arrêt d'un appareil, les liquides descendent dans la colonne et s'accumulent dans la cuve. Afin de démarrer la colonne si le niveau est trop haut ou si on veut faire un dégivrage de l'appareil en envoyant un gaz à température ambiante pour réchauffer entièrement l'appareil, il est nécessaire d'enlever le liquide de cuve et celui-ci est généralement envoyé à un échangeur de chaleur dédié où il se vaporise avant d'être envoyé à l'atmosphère ou tout autre système de purge, par exemple un stockage extérieur où les liquides se vaporisent lentement. Ici l'échangeur H sert pendant l'opération normal de l'appareil pour vaporiser le liquide de purge 3, la vanne V1 étant ouverte et la vanne V2 fermée.

Après un arrêt et avant le redémarrage ou un dégivrage, la vanne V2 est ouverte pour permettre au liquide de cuve de passer dans la conduite 13 vers l'échangeur de chaleur H.

La source de chaleur pour vaporiser les deux liquides à des périodes différentes peut être de l'électricité ou un fluide 15 présent sur le site, tel que de l'air ou de l'eau.

Le liquide de cuve est ainsi vaporisé et envoyé à l'air.

Dans la figure, le liquide de cuve est celui de la première colonne K1 mais il peut provenir d'une autre colonne, par exemple K2 ou une colonne d'argon.

Dans les figures, le liquide vaporisé et réchauffé dans l'échangeur H est divisé en deux parties, seule la partie 7 étant analysée et seule la partie 5 passant au débitmètre FIC. Ainsi la partie 5 n'est pas analysée et le débit de la partie 7 n'est pas mesurée.

Afin de réduire l'empreinte au sol et d'augmenter la pression hydrostatique du liquide de purge arrivant à l'échangeur de chaleur H, cet échangeur est disposé en dessous de la première colonne K1 et de préférence en dessous de l'enceinte qui contient les colonnes K1, K2. Il est possible de disposer l'échangeur de chaleur E entre la cuve de la colonne K1 et l'échangeur H.

Pour les deux figures, la colonne K1 fonctionne entre 1,2 et 6,5 bars, de préférence entre 1,2 et 4,5 bars.

## Revendications

1. Procédé de vaporisation de liquide de purge d'un vaporiseur (R ) de liquide cryogénique, le liquide contenant au moins une impureté dans lequel on soutire le liquide de purge (3) d'un bain de liquide entourant le vaporiseur ou issu du vaporiseur, on vaporise tout le liquide de purge dans un réchauffeur (H), **caractérisé en ce que** l'on analyse la teneur en l'au moins une impureté d'une première partie (5,7) du liquide vaporisé réchauffé et on mesure le débit d'une deuxième partie du liquide vaporisé réchauffé.

2. Procédé selon la revendication 1 dans lequel on divise le liquide réchauffé à au moins -50°C en deux parties (5,7) avant d'analyser la teneur en l'au moins une impureté de la première partie et de mesurer le débit de la deuxième partie.

3. Procédé selon la revendication 2 dans lequel la première partie (7) constitue au plus 5 %, préférentiellement inférieure à 1%, voire 0.5% du liquide vaporisé.

4. Procédé selon l'une des revendications précédentes dans lequel le vaporiseur (R) de liquide cryogénique vaporise du liquide cryogénique pour produire un produit gazeux (9), au moins une partie, de préférence la deuxième partie (5), du liquide vaporisé dans le réchauffeur (H) étant envoyée se mélanger avec le produit gazeux

5. Procédé selon la revendication 4 combinée avec l'une des revendications 2 ou 3 dans lequel le produit gazeux (9) se réchauffe dans un échangeur de chaleur (E) jusqu'à une température supérieure à 0°C et ensuite est mélangé avec la deuxième partie du liquide vaporisé dans le réchauffeur (H).

6. Procédé de séparation d'air par distillation cryogénique comprenant un système de colonnes (K1, K2) dans lequel de l'air (1) est refroidi et séparé dans le système de colonnes pour produire un liquide cryogénique qui se vaporise dans un vaporiseur (R), dont le liquide de purge (3) est vaporisé selon l'une des revendications précédentes.

7. Procédé selon l'une des revendications précédentes où le liquide cryogénique vaporisé dans le vaporiseur (R) est de l'oxygène liquide ou un liquide enrichi en oxygène contenant au moins 25% mol d'oxygène.

8. Appareil de vaporisation de liquide de purge (3) d'un vaporiseur (R) de liquide cryogénique, le liquide contenant au moins une impureté comprenant un vaporiseur de liquide cryogénique, une conduite pour soutirer le liquide de purge d'un bain de liquide entourant le vaporiseur ou issu du vaporiseur, un réchauffeur (H) pour vaporiser le liquide de purge , un débitmètre (FIC) et un analyseur (AI) pour analyser la teneur en l'au moins une impureté du liquide de purge **caractérisé en ce qu'**il comprend des moyens pour envoyer une première partie du liquide de purge vaporisé à l'analyseur pour analyser la teneur d'au moins une impureté et une conduite pour envoyer une deuxième partie du liquide de purge vaporisé vers le débitmètre.

9. Appareil selon la revendication 8 ne comprenant pas de moyens pour envoyer la première partie du liquide de purge vaporisé vers le débitmètre (FIC).

10. Appareil selon la revendication 8 ou 9 ne comprenant pas de moyens pour envoyer la deuxième partie du liquide de purge vaporisé vers l'analyseur.

11. Appareil de séparation d'air par distillation cryogénique comprenant un système de colonnes (K1, K2) pour produire un liquide cryogénique et un appareil de vaporisation de liquide de purge selon la revendication 8, 9 ou 10, le système de colonnes étant relié au réchauffeur (H) de liquide cryogénique pour y envoyer un liquide de cuve (13) d'une colonne (K1) du système de colonnes, l'appareil comprenant des moyens pour soutirer le liquide de purge (3) de la deuxième colonne et le liquide de cuve de la première colonne.

12. Appareil selon la revendication 11 dans lequel le système de colonnes comprend une première colonne (K1) opérant à une première pression et une deuxième colonne (K2) opérant à une deuxième pression plus basse que la première pression.

## Patentansprüche

1. Verfahren zum Verdampfen von Spülflüssigkeit eines Verdampfers (R) für kryogene Flüssigkeit, wobei die Flüssigkeit mindestens eine Verunreinigung enthält, bei dem man die Spülflüssigkeit (3) eines Flüssigkeitsbads abzieht, das den Verdampfer umgibt oder aus dem Verdampfer hervorgegangen ist, man die gesamte Spülflüssigkeit in einem Erhitzer (H) verdampft, **dadurch gekennzeichnet, dass** man den Gehalt an der mindestens einen Verunreinigung eines ersten Teils (5,7) der erhitzten verdampften Flüssigkeit analysiert und man den Volumenstrom eines zweiten Teils der erhitzten verdampften Flüssigkeit misst.

2. Verfahren nach Anspruch 1, bei dem man die auf mindestens -50 °C erhitzte Flüssigkeit in zwei Teile (5,7) teilt, bevor man den Gehalt an der mindestens einen Verunreinigung des ersten Teils analysiert und den Volumenstrom des zweiten Teils misst.

3. Verfahren nach Anspruch 2, bei dem der erste Teil (7) höchstens 5 %, bevorzugt weniger als 1 % oder sogar 0,5 % der verdampften Flüssigkeit ausmacht.

4. Verfahren nach einem der vorhergehenden Ansprüche, bei dem der Verdampfer (R) für kryogene Flüssigkeit kryogene Flüssigkeit verdampft, um ein gasförmiges Produkt (9) zu erzeugen, wobei mindestens ein Teil, bevorzugt der zweite Teil (5), der in dem Erhitzer (H) verdampften Flüssigkeit so geleitet wird, dass er mit dem gasförmigen Produkt gemischt wird.

5. Verfahren nach Anspruch 4 in Verbindung mit einem der Ansprüche 2 oder 3, bei dem das gasförmige Produkt (9) in einem Wärmetauscher (E) bis auf eine Temperatur von mehr als 0 °C erhitzt wird und anschließend mit dem zweiten Teil der in dem Erhitzer (H) verdampften Flüssigkeit gemischt wird.

6. Verfahren zum Trennen von Luft durch kryogene Destillation, umfassend ein Säulensystem (K1, K2), in dem Luft (1) gekühlt wird und in dem Säulensystem getrennt wird, um eine kryogene Flüssigkeit zu erzeugen, die in einem Verdampfer (R) verdampft, dessen Spülflüssigkeit (3) nach einem der vorhergehenden Ansprüche verdampft wird.

7. Verfahren nach einem der vorhergehenden Ansprüche, bei dem die in dem Verdampfer (R) verdampfte kryogene Flüssigkeit flüssiger Sauerstoff ist oder eine an Sauerstoff angereicherte Flüssigkeit, die mindestens 25 mol-% Sauerstoff enthält.

8. Gerät zum Verdampfen von Spülflüssigkeit (3) eines Verdampfers (R) für kryogene Flüssigkeit, wobei die Flüssigkeit mindestens eine Verunreinigung enthält, umfassend einen Verdampfer für kryogene Flüssigkeit, eine Leitung zum Abziehen der Spülflüssigkeit eines Flüssigkeitsbads, das den Verdampfer umgibt oder aus dem Verdampfer hervorgegangen ist, einen Erhitzer (H) zum Verdampfen der Spülflüssigkeit, einen Durchflussmesser (FIC) und einen Analysator (AI) zum Analysieren des Gehalts der Spülflüssigkeit an der mindestens einen Verunreinigung, **dadurch gekennzeichnet, dass** es Mittel umfasst, um einen ersten Teil der verdampften Spülflüssigkeit zu dem Analysator zu leiten, um den Gehalt der mindestens einen Verunreinigung zu analysieren, und eine Leitung, um einen zweiten Teil der verdampften Spülflüssigkeit zu dem Durchflussmesser zu leiten.

9. Gerät nach Anspruch 8, das keine Mittel umfasst, um den ersten Teil der verdampften Spülflüssigkeit zu dem Durchflussmesser (FIC) zu leiten.

10. Gerät nach Anspruch 8 oder 9, das keine Mittel umfasst, um den zweiten Teil der verdampften Spülflüssigkeit zu dem Analysator zu leiten.

11. Gerät zum Trennen von Luft durch kryogene Destillation, umfassend ein Säulensystem (K1, K2), um eine kryogene Flüssigkeit zu erzeugen, und ein Gerät zum Verdampfen von Spülflüssigkeit nach Anspruch 8, 9 oder 10, wobei das Säulensystem mit dem Erhitzer (H) für kryogene Flüssigkeit verbunden ist, um eine Sumpfflüssigkeit (13) einer Säule (K1) des Säulensystems zu ihm zu leiten, wobei das Gerät Mittel umfasst, um die Spülflüssigkeit (3) der zweiten Säule und die Sumpfflüssigkeit der ersten Säule abzuziehen.

12. Gerät nach Anspruch 11, wobei das Säulensystem eine erste Säule (K1) umfasst, die bei einem ersten Druck arbeitet, und eine zweite Säule (K2), die bei einem zweiten Druck arbeitet, der niedriger als der erste Druck ist.

## Claims

1. Process for vaporizing purge liquid from a cryogenic liquid vaporizer (R), the liquid containing at least one impurity, in which the purge liquid (3) is withdrawn from a bath of liquid surrounding the vaporizer or resulting from the vaporizer, all of the purge liquid is vaporized in a heater (H), **characterized in that** the content of the at least one impurity in a first portion (5, 7) of the heated vaporized liquid is analysed and the flow rate of a second portion of the heated vaporized liquid is measured.

2. Process according to Claim 1, in which the liquid heated to at least -50°C is divided into two portions (5, 7) before analysing the content of the at least one impurity in the first portion and measuring the flow rate of the second portion.

3. Process according to Claim 2, in which the first portion (7) constitutes at most 5%, preferentially less than 1%, or even 0.5% of the vaporized liquid.

4. Process according to one of the preceding claims, in which the cryogenic liquid vaporizer (R) vaporizes cryogenic liquid in order to produce a gaseous product (9), at least one portion, preferably the second portion (5), of the liquid vaporized in the heater (H) being sent to mix with the gaseous product.

5. Process according to Claim 4 combined with either of Claims 2 and 3, in which the gaseous product (9) is heated in a heat exchanger (E) to a temperature above 0°C and then is mixed with the second portion of the liquid vaporized in the heater (H).

6. Process for separating air by cryogenic distillation comprising a system of columns (K1, K2) in which air (1) is cooled and separated in the system of columns in order to produce a cryogenic liquid which is vaporized in a vaporizer (R), the purge liquid (3) from which is vaporized according to one of the preceding claims.

7. Process according to one of the preceding claims, where the cryogenic liquid vaporized in the vaporizer (R) is liquid oxygen or an oxygen-enriched liquid containing at least 25 mol% oxygen.

8. Device for vaporizing purge liquid (3) from a cryogenic liquid vaporizer (R), the liquid containing at least one impurity, comprising a cryogenic liquid vaporizer, a line for withdrawing the purge liquid from a bath of liquid surrounding the vaporizer or resulting from the vaporizer, a heater (H) for vaporizing the purge liquid, a flowmeter (FIC) and an analyser (AI) for analysing the content of the at least one impurity in the purge liquid, **characterized in that** it comprises means for sending a first portion of the vaporized purge liquid to the analyser in order to analyse the content of at least one impurity and a line for sending a second portion of the vaporized purge liquid to the flowmeter.

9. Device according to Claim 8, not comprising means for sending the first portion of the vaporized purge liquid to the flowmeter (FIC).

10. Device according to Claim 8 or 9, not comprising means for sending the second portion of the vaporized purge liquid to the analyser.

11. Device for separating air by cryogenic distillation comprising a system of columns (K1, K2) for producing a cryogenic liquid and a device for vaporizing purge liquid according to Claim 8, 9 or 10, the system of columns being connected to the cryogenic liquid heater (H) in order to send thereto a bottom liquid (13) from a column (K1) of the system of columns, the device comprising means for withdrawing the purge liquid (3) from the second column and the bottom liquid from the first column.

12. Device according to Claim 11, in which the system of columns comprises a first column (K1) operating at a first pressure and a second column (K2) operating at a second pressure which is lower than the first pressure.
